# EUROPEAN PATENT APPLICATION

(11) **EP 4 332 445 A1**
(43) Date of publication of application: **06.03.2024**
(21) Application number: 22193081.1
(22) Date of filing: 31.08.2022
(51) Int. Cl.: F24D 19/10, F24H 15/215, F24H 15/219, F24H 15/258, F24H 15/262, F24H 15/174, F24H 15/175, F24H 15/31, G05D 23/19

(54) **METHOD FOR CONTROLLING A TEMPERATURE INFLUENCING SYSTEM AND TEMPERATURE INFLUENCING SYSTEM**

(71) Applicant: Danfoss A/S, 6430 Nordborg (DK)
(72) Inventor: Bogar, Sinisa, 6430 Nordborg (DK)
(74) Representative: Keil & Schaafhausen Patentanwälte PartGmbB

(57) **Abstract**

A method for controlling a temperature influencing system (1) having a heat exchanger (2) which is supplied with a heat carrying fluid the temperature of which is weather depending is described, wherein a flow of a heat carrying fluid through the heat exchanger (2) is controlled.

Such a method should make efficient use of energy.

To this end a first temperature of the heat carrying fluid on one side of the heat exchanger (2) and a second temperature of the heat carrying fluid on the other side of the heat exchanger is determined and the flow of the heat carrying fluid through the heat exchanger is controlled depending on the first temperature and the second temperature.

## Description

The present invention relates to a method for controlling a temperature influencing system having a heat exchanger which is supplied with a heat carrying fluid the temperature of which is weather depending, wherein a flow of the heat carrying fluid through the heat exchanger is controlled.

Furthermore, the invention relates to a temperature influencing system comprising a heat exchanger connected to a supply arrangement of a weather dependent heat carrying fluid and means for controlling a flow of the heat carrying fluid through the heat exchanger.

Such a method and such a system are used, for example, to influence the temperature in a room of a building. The temperature influencing system can be used, for example, for heating the room when the heat carrying fluid has a temperature which is higher than the temperature of the room, or it can be used to chill the room, when the temperature of the heat carrying fluid is lower than the temperature of the room.

In order to influence the temperature of the room, the heat carrying fluid is guided through the heat exchanger, in which heat is transferred from the heat carrying fluid to the ambient air during heating or from the ambient air to the heat carrying fluid, when cooling. In many cases the air is blown through the heat exchanger by means of a fan or the like. Examples for the heat exchangers are fan coils, air handling units or radiant panels.

In order to save energy, it is known to make the temperature of the heat carrying fluid dependent on the outside weather, in particular of the outside temperature. In this case the heat carrying fluid is weather compensated. In other words, when the outside temperature is low, the temperature of the heat carrying fluid is high, and when the outside temperature is high, the temperature of the heat carrying fluid is lower.

The object underlying the invention is to make efficient use of energy.

This object is solved in that a first temperature of the heat carrying fluid on one side of the heat exchanger and a second temperature of the heat carrying fluid on the other side of the heat exchanger is measured and the flow of the heat carrying fluid through the heat exchanger is controlled depending on the first temperature and the second temperature.

In other words, the temperature difference over the heat exchanger is used as a parameter for controlling the flow of the heat carrying fluid through the heat exchanger. When the temperature difference of the heat carrying fluid when passing the heat exchanger is too small, the flow of the heat carrying fluid is reduced. Thus, only the necessary amount of heat is consumed on the one hand and the required amount of heat is transferred to the room or removed from the room.

In an embodiment of the invention a temperature difference between the second temperature and the first temperature depends on the first temperature and the flow of the heat carrying fluid through the heat exchanger is controlled to reach the respective minimum temperature difference. In other words, for each first temperature a specific minimum temperature difference is provided and the flow of the heat carrying fluid through the heat exchanger is adjusted to reach the specific minimum temperature difference matching to the actual first temperature. This means that, depending on the mode of operation, it is possible that the temperature difference varies with the first temperature.

In an embodiment of the invention in a first predetermined temperature range of the first temperature a difference between the first temperature and the second temperature is larger at a higher first temperature and smaller at a lower first temperature. In this case, it is possible that the system controls the heat transfer from the heat carrying fluid to the air in the room depending on the outdoor temperature or the outdoor weather without having a direct connection between the outdoor conditions and the means for controlling the flow of the heat carrying fluid. The only information which is available is the information about the temperature of the heat carrying fluid. However, this information is sufficient to control the flow of the heat carrying fluid in a way that enough heat is transferred from the heat carrying fluid to the air of the room. When the outdoor temperature is low, the temperature of the heat carrying fluid is high, and when the temperature difference is large, a corresponding high amount of heat can be transferred to the room. When the outdoor temperature is higher, then the temperature of the heat carrying fluid is lower and it is not necessary to transfer so much heat to the air of the room. This is a simple way for saving energy.

In an embodiment of the invention in the first predetermined temperature range the heat exchanger is used for heating. In particular during heating periods, it is of advantage to save energy by reducing the amount of heat transferred to the room to a necessary size.

In an embodiment of the invention the temperature difference between the first temperature and the second temperature decreases linearly with decreasing first temperature. In this case it is only necessary to specify a temperature difference for two first temperatures, for example for the highest first temperature and for the lowest first temperature or any other two temperatures between the highest and the lowest temperature, wherein the other temperature differences can be determined by interpolation (for example).

In an embodiment of the invention in a second predetermined temperature range of the first temperature a difference between the first temperature and the second temperature is kept constant. The second predetermined temperature range of the first temperature can be above a pre-determined outside temperature or below a predetermined outside temperature. It is also possible to use two second predetermined temperature ranges of the first temperature, wherein a temperature difference between the first temperature and the second temperature is constant in each of the second predetermined temperature ranges but differs between the two second predetermined temperature ranges. In particular during cooling periods, i.e. when a room is to be chilled since the outside temperature is above a predetermined value, a second predetermined temperature range is of advantage, since the chiller receives a constant temperature drop over the heat exchanger.

In an embodiment of the invention the first temperature is a temperature upstream the heat exchanger. The temperature upstream the heat exchanger allows a clear indication about the conditions outside the room or of the weather.

In an embodiment of the invention the flow of the heat carrying fluid is controlled by means of a valve. A valve is a simple mean for adjusting the flow. The valve can be provided with an actuator which in turn can be controlled by a controller or the like.

The object is solved with a temperature influencing system as described at the outset in that a first temperature sensor is arranged on one side of the heat exchanger and a second temperature sensor is arranged on the other side of the heat exchanger, wherein a controller is connected to the first temperature sensor and to the second temperature sensor and controls the means for controlling the flow of the heat carrying fluid through the heat exchanger based on a temperature signal of the first temperature sensor and on a temperature signal of the second temperature sensor.

In other words, the controller uses the two temperatures on both sides of the heat exchanger, namely the temperature difference or temperature drop over the heat exchanger, to control the flow of the heat carrying fluid through the heat exchanger. Thus, it is possible to limit the amount of heat which is transferred to or removed from the room to a necessary size. In some cases, the controller is integrated in or part of an actuator or a valve. In this case it is possible to say that the actuator or the valve is connected to the two temperature sensors and uses the two temperatures to control the flow of the heat carrying fluid.

In an embodiment of the invention the means for controlling the flow of the heat carrying fluid through the heat exchanger comprise a valve which is provided with an actuator. The actuator can move the valve in opening direction or in closing direction to influence the flow of the heat carrying fluid through the heat exchanger. When the valve is moved in closing direction, the flow is reduced and when the valve is moved in opening direction, the flow is increased.

In an embodiment of the invention the controller is provided with a setpoint of the second temperature which depends on the first temperature and controls the means for controlling the flow of the heat carrying fluid through the heat exchanger such that the setpoint of the second temperature is reached. In other words, the temperature difference over the heat exchanger depends on the first temperature and the means for controlling the flow of the heat carrying fluid adjust this flow so that the respective temperature difference is achieved and correspondingly a specific amount of heat is transferred to the room or removed from the room.

In an embodiment of the invention the controller is provided with at least a first predetermined temperature range and a second predetermined temperature range, wherein in the first predetermined temperature range a temperature difference between the first temperature and the setpoint of the second temperature varies with the first temperature and in the second predetermined temperature range the temperature difference between the first temperature and the setpoint of the second temperature is constant. In other words, in the first predetermined temperature range the system can be used for heating and in the second predetermined temperature range the system can be used for chilling the room. The system can automatically detect in which temperature range it is operated, since the temperature sensor detects the temperature of the incoming and outgoing heat carrying fluid. Thus, the flow is automatically adjusted to the weather conditions. During heating it is desirable to make the temperature difference over the heat exchanger dependent on the weather conditions. During chilling it is desirable to make the temperature difference constant or almost constant to obtain an optimum working point for the chiller.

In an embodiment of the invention in the first predetermined temperature range the setpoint of the second temperature varies linearly. This has the advantage that in one embodiment only two setpoints for the second temperature must be predetermined. The remaining setpoints can be obtained, for example, by interpolation. In another embodiment it is sufficient to determine four temperature points, namely two temperature points for the first temperature and two temperature points for the second temperature. The remaining set points can be obtained, for example, also by interpolation.

In an embodiment of the invention the first temperature sensor is arranged upstream the heat exchanger and the second temperature sensor is arranged downstream the heat exchanger. Thus, the first temperature sensor can detect the temperature of the incoming heat carrying fluid and the second temperature sensor can detect the temperature of the outgoing or return fluid.

An embodiment of the invention will now be described with reference to the drawing, wherein:
- Fig. 1: schematically shows a temperature influencing system and
- Fig. 2: shows a schematic illustration of temperatures during heating of the system.

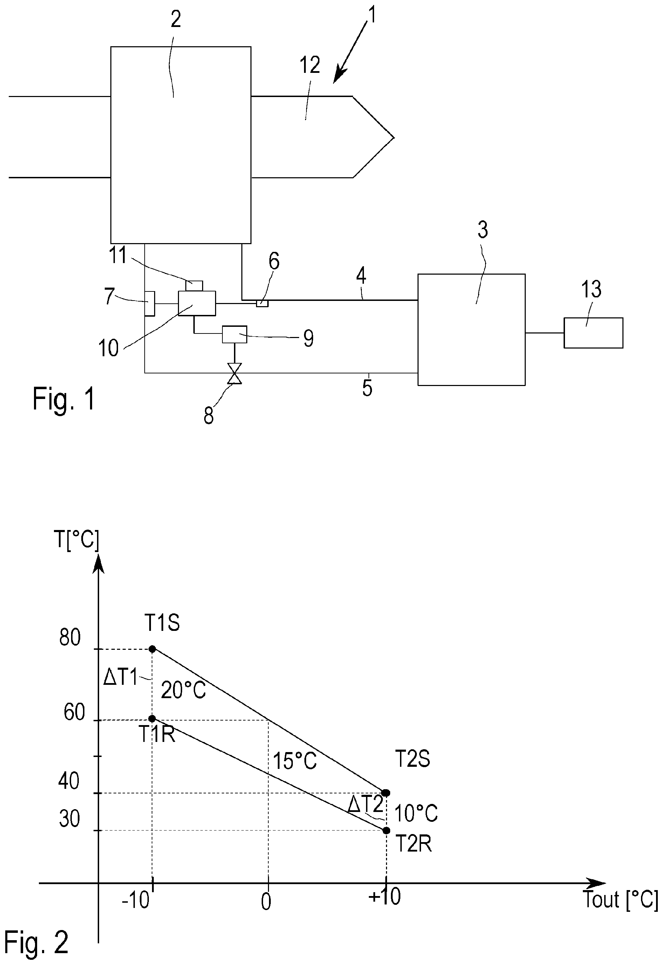

Fig. 1 schematically shows a temperature influencing system 1 having a heat exchanger 2 which is supplied with carrying fluid. The heat carrying fluid is supplied by means of a source 3 which is connected to an outdoor temperature sensor 13. In this way it is possible to make the temperature of the heat carrying fluid which is supplied to the heat exchanger 2 weather depending, in particular depending on the outdoor temperature Tout (cf. Fig. 2). The heat exchanger 2 is connected to the source 3 by means of a supply line 4 and a return line 5. A first temperature sensor 6 detects the temperature in the supply line 4 and a second temperature sensor 7 detects a temperature of the heat carrying fluid in the return line 5.

A valve 8 is provided in the return line 5. It should be noted, however, that the valve 8 can alternatively be arranged in the supply line 4.

The valve 8 is provided with an actuator 9. The actuator 9 is able to move the valve 8 in opening direction to increase a flow of heat carrying fluid through the heat exchanger 2 or in closing direction in order to decrease the flow of the heat carrying fluid through the heat exchanger 2.

The actuator 9 in turn is controlled by means of a controller 10. The controller 10 is connected to the first temperature sensor 6 and to the second temperature sensor 7. In other words, the controller 10 is able to determine a temperature difference between the temperature of the heat carrying fluid in the supply line 4 and the temperature of the heat carrying fluid in the return line 5. The controller 10 can be part of the actuator 9or it can be separated from the actuator 9. In the first case the actuator 9 is connected to the two temperature sensors 6, 7. The drawing shows the controller 10 as separate part for the purpose of illustration.

The controller 10 is provided with a memory 11. The memory 11 holds ready a number of supply temperatures of the heat carrying fluid and corresponding temperature differences, the function of which will be explained below. When the controller 10 is integrated in the actuator 9, the memory 11 is also part of the actuator 9.

Fig. 2 schematically shows two graphs representing the supply temperature and the return temperature over the outdoor temperatures Tout.

The outdoor temperature Tout is plotted on the horizontal axis and the temperature T of the heat carrying fluid is plotted on the vertical axis.

When the outdoor temperature Tout is low, for example -10°C, the supply temperature T1S of the heat carrying fluid is high, in the present example 80°C. When the heat carrying fluid flows through the heat exchanger 2, it transfers heat to the ambient air of the room which is indicated by reference numeral 12 in Fig. 1. Thus, the return temperature T1R of the heat carrying fluid leaving the heat exchanger 2 is lower by a temperature difference ΔT1. This temperature difference is quite large, so that a large amount of heat can be transferred to the air 12 which is necessary, when the outdoor temperature Tout is low.

On the other hand, when the outdoor temperature Tout is higher, for example +10°C, the supply temperature T2S of the heat carrying fluid supplies to the heat exchanger 2 is lower, for example 40°C. When the outdoor temperature Tout is higher, it is not necessary to transfer so much heat to the air 12, so that the temperature difference ΔT2 can be lower, for example 10°C. This means, that the return temperature T2R of the heat carrying fluid is not so much reduced as in the first case, when the outdoor temperature Tout is -10°C. However, a smaller amount of heat is transferred to the air 12 in the room.

It is sufficient, that the memory 11 stores for only two supply temperatures T1S, T2S the respective ΔT1, ΔT2, or the return temperature T1R, T2R, while the remaining temperature differences can be obtained by interpolation. This is shown for the outdoor temperature of 0°C. This temperature is in the middle between - 10°C and +10°C. Consequently, the temperature difference between the supply temperature and the return temperature is the middle between the temperature differences ΔT1, namely 15°C.

In this embodiment the temperature difference differs linearly between the two extreme values.

It is possible to use the same varying temperature difference ΔT for chilling the room. However, in some cases it is of advantage to have a constant temperature difference, since in this case the chiller can be operated at an optimum working point.

This can be realized in that two different temperature ranges are defined; the first temperature range being used in the case of heating a room and the second temperature range being used in case of chilling the room. The system 1 can distinguish between these two temperature ranges, since the temperature sensor 6 in the supply line 4 gets information about the temperature of the supplied heat carrying fluid. When this temperature is low, more precisely lower than the room temperature, then the system is operated in chilling mode, and when it is higher than the room temperature, then the system is operated in heating mode.

In Fig. 2 the first temperature range would be between - 10°C and +10°C, and the second temperature range is above 10°C outside temperature. In the second temperature range, i.e. at an outside temperature of 10°C or more, the ΔT2 is kept constant by 10°C.

It is also possible to keep constant the temperature difference ΔT1 constant, when the outside temperature falls below - 10°C.

It is also possible to combine the two second temperature ranges, wherein the temperature differences ΔT1 and ΔT2 in second temperature ranges are different.

Based on the information obtained from the memory 11 the controller 10 operates the actuator 9 which actuates the valve 8 to adjust the flow through heat exchanger 2 to a size in which the desired temperature difference is obtained.

There are two possible ways to achieve the goal of the invention. It is possible to use two temperature points T1S, T2S and then have a ΔT1, ΔT2 for these two temperature points or to have four temperature points T1S, T2S, T1R, T2R to obtain the same results.

## Claims

1. Method for controlling a temperature influencing system (1) having a heat exchanger (2) which is supplied with a heat carrying fluid the temperature of which is weather depending, wherein a flow of the heat carrying fluid through the heat exchanger (2) is controlled, **characterized in that** a first temperature (T1S, T2S) of the heat carrying fluid on one side of the heat exchanger (2) and a second temperature (T1R, T2R) of the heat carrying fluid on the other side of the heat exchanger (2) is determined and the flow of the heat carrying fluid through the heat exchanger (2) is controlled depending on the first temperature (T1S, T2S) and the second temperature (T1R, T2R).

2. Method according to claim 1, **characterized in that** a temperature difference (ΔT1, ΔT2) between the second temperature (T1R, T2R) and the first temperature (T1S, T2S) depends on the first temperature (T1S, T2S) and the flow of the heat carrying fluid through the heat exchanger (2) is controlled to reach the respective temperature difference (ΔT1, ΔT2).

3. Method according to claim 1 or 2, **characterized in that** in a first predetermined temperature range of the first temperature (T1S, T2S) a difference between the first temperature (T1S, T2S) and the second temperature (T1R, T2R) is larger at a higher first temperature (T1S) and smaller at a lower first temperature (T2S).

4. Method according to claim 3, **characterized in that** in the first predetermined temperature range the heat exchanger (2) is used for heating.

5. Method according to claim 3 or 4, **characterized in that** the temperature difference between the first temperature (T1S, T2S) and the second temperature (T1R, T2R) decreases linearly with decreasing first temperature (T1S, T2S).

6. Method according to any of claims 1 to 5, **characterized in that** in a second predetermined temperature range of the first temperature (T1S, T2S) a difference between the first temperature (T1S, T2S) and the second temperature is kept constant.

7. Method according to any of claims 1 to 7, **characterized in that** the first temperature (T1S, T2S) is a temperature upstream the heat exchanger (2).

8. Method according to any of claims 1 to 7, **characterized in that** the flow of the heat carrying fluid is controlled by means of a valve (8).

9. Temperature influencing system comprising a heat exchanger (2) connected to a supply arrangement (3, 4, 5) of a weather dependent heat carrying fluid and means for controlling a flow of the heat carrying fluid through the heat exchanger (2), **characterized in that** a first temperature sensor (6) is arranged on one side of the heat exchanger (2) and a second temperature sensor (7) is arranged on the other side of the heat exchanger (2), wherein a controller (10) is connected to the first temperature sensor (6) and to the second temperature sensor (7) and controls the means for controlling the flow of the heat carrying fluid through the heat exchanger (2) based on a temperature signal of the first temperature sensor (6) and on a temperature signal of the second temperature sensor (7).

10. Temperature influencing system according to claim 9, **characterized in that** the means for controlling the flow of the heat carrying fluid through the heat exchanger (2) comprise a valve (8) which is provided with an actuator (9).

11. Temperature influencing system according to claim 9 or 10, **characterized in that** the controller (10) is provided with a setpoint of the second temperature (T1R, T2R) which depends on the first temperature (T1S, T2S) and controls the means for controlling the flow of the heat carrying fluid through the heat exchanger (2) such that the setpoint of the second temperature (T1R, T2R) is reached.

12. Temperature influencing system according to claim 11, **characterized in that** the controller (10) is provided with at least a first predetermined temperature range and a second predetermined temperature range, wherein in the first predetermined temperature range a temperature difference between the first temperature (T1S, T2S) and the setpoint of the second temperature (T1R, T2R) varies with the first temperature (T1S, T2S) and in the second predetermined temperature range the temperature difference between the first temperature (T1S, T2S) and the setpoint of the second temperature (T1R, T2R) is constant.

13. Temperature influencing system according to claim 12, **characterized in that** in the first predetermined temperature range the setpoint of the second temperature (T1R, T2R) varies linearly.

14. Temperature influencing system according to any of claims 9 to 13, **characterized in that** the first temperature sensor (6) is arranged upstream the heat exchanger (2) and the second temperature sensor (7) is arranged downstream the heat exchanger (2).
